Europäisches Patentamt

European Patent Office

Office européen des brevets

(19)

(11) Numéro de publication: **0 185 615 B1**

(12) **FASCICULE DE BREVET EUROPEEN**

(45) Date de publication de fascicule du brevet:
**09.10.91**

(51) Int. Cl.5: **C03B 37/03**, C03B 37/12,
G02B 6/44

(21) Numéro de dépôt: **85810574.5**

(22) Date de dépôt: **04.12.85**

(54) **Procédé de fabrication d'un élément de câblage à fibre optique, élément de câblage obtenu par ce procédé et installation pour la mise en oeuvre du procédé.**

(30) Priorité: **14.12.84 CH 5966/84**

(43) Date de publication de la demande:
**25.06.86 Bulletin 86/26**

(45) Mention de la délivrance du brevet:
**09.10.91 Bulletin 91/41**

(84) Etats contractants désignés:
**AT BE CH DE FR GB IT LI NL SE**

(56) Documents cités:
DE-A- 3 239 024    FR-A- 2 547 067
GB-A- 2 013 927    GB-A- 2 017 335
GB-A- 2 079 970    US-A- 4 154 783

(73) Titulaire: **Nokia-Maillefer S.A.**
**Route du Bois**
**CH-1024 Ecublens Canton de Vaud(CH)**

(72) Inventeur: **Schlaeppi, René**
**Chemin des Charmilles 4**
**CH-1008 Prilly(CH)**
Inventeur: **Bruggmann, Rémy**
**La Treille**
**CH-1817 Brent(CH)**

(74) Mandataire: **Rochat, Daniel Jean et al**
**Bovard SA Ingénieurs-Conseils ACP Optin-**
**genstrasse 16**
**CH-3000 Bern 25(CH)**

## Description

On sait que, lors de la fabrication d'un câble à fibre optique, la fibre doit présenter une longueur excédentaire par rapport à l'enveloppe. Le problème qui se pose est celui de la maîtrise de cette longueur excédentaire, appelée surlongueur du ou des organe(s) de guidage par rapport à la ou aux enveloppes(s) que comporte le câble. Le ou les organes de guidage des ondes lumineuses qui sont formés de fibres présentant une certaine fragilité doivent être libres dans l'enveloppe qui les protège et il est nécessaire de veiller à ce que les déformations que l'élément de câblage subira lors de son enroulement sur les bobines réceptrices, puis lors de sa manutention et de sa mise en place, ne risquent pas de détériorer les constituants fragiles des fibres. Le brevet européen no 0015 425 donne, à titre d'exemple, des moyens qui peuvent être prévus pour assurer la liberté du ou des organes de guidage des ondes lumineuses à l'intérieur de la ou des enveloppes qui les protègent.

On connaît d'autre part, par le document DE-32 39 024 un procédé et une installation qui sont destinés à assurer la surlongueur désirée, à la suite de l'extrusion d'une gaine autour d'un organe de guidage d'ondes et d'une opération de refroidissement effectuée en plusieurs étapes.

Le but de la présente invention est de perfectionner les procédés et installations connus de manière à permettre l'obtention d'éléments de c'ablage dont l'organe ou les organes de guidage d'ondes sont contenus dans leur enveloppe avec une surlongueur déterminée, et cela de manière sûre et régulière.

Dans ce but, partant de la technique divulguée par le document DE-32 39 024, l'invention a pour premier objet un procédé de fabrication d'un élément de câblage à fibre optique, comportant le passage d'au moins un organe de guidage d'ondes lumineuses dans une tête d'extrusion, la formation d'une enveloppe de protection autour de l'organe de guidage par extrusion de matière plastique dans cette tête, de manière à former une enveloppe dans laquelle l'organe de guidage d'ondes est libre, puis le refroidissement de l'enveloppe et de l'organe de guidage, le refroidissement étant effectué en une première étape dans laquelle l'organe de guidage d'ondes et l'enveloppe sont tirés conjointement depuis la tête d'extrusion à travers un premier refroidisseur, et en une seconde étape dans laquelle l'organe de guidage d'ondes et l'enveloppe sont conduits conjointement à travers un second refroidisseur de manière telle que l'organe de guidage et l'enveloppe se trouvent à la fin de la première étape à une première température $T_1$ et à la fin de la seconde étape à une température $T_2$

inférieure à $T_1$, le refroidissement étant suivi par l'enroulement de l'élément de câblage ainsi obtenu sur un récepteur, caractérisé en ce que, dans la première étape de refroidissement l'organe de guidage d'ondes et l'enveloppe sont soumis à des efforts de traction de valeur prédéterminée, et dans la seconde étape de refroidissement l'organe de guidage d'ondes est soumis à un effort de traction nul et l'enveloppe est soumise à un effort de traction aussi réduit que possible.

L'invention a encore pour objets un élément de câblage obtenu selon ce procédé et une installation pour la mise en oeuvre du procédé selon la revendication 1, comportant au moins une bobine débitrice d'au moins un organe de guidage d'ondes lumineuses, une tête d'extrusion, un premier dispositif de refroidissement comportant un premier bac réglé pour refroidir l'élément de câblage à une première température $T_1$, un retireur principal tirant l'élément de câblage à travers la tête d'extrusion et le premier bac, un deuxième dispositif de refroidissement réglé pour refroidir l'enveloppe à une seconde température $T_2$ plus faible que la température $T_1$, un retireur auxiliaire capable de tirer l'élément de câblage à travers le deuxième dispositif de refroidissement et un dispositif récepteur d'un élément de câblage terminé capable de recevoir et d'entraîner des bobines réceptrices de manière à stocker l'élément de câblage à la sortie du retireur auxiliaire, caractérisé en ce que la ou les bobines débitrices sont munies de freins permettant de régler la tension du ou des organes de guidage, le deuxième dispositif de refroidissement comporte un second bac et le retireur auxiliaire est capable de tirer l'élément de câblage à travers le second bac avec une force de traction aussi réduite que possible.

On va décrire ci-après, à titre d'exemple et en se référant au dessin annexé, comment le procédé peut être mis en oeuvre:

La fig. 1 est une représentation schématique des divers éléments de l'installation,

la fig. 2, une vue schématique de détail à échelle agrandie, montrant la situation de l'élément de câblage à l'entrée du retireur principal et

la fig. 3, une vue semblable à la fig. 2, montrant la situation de l'élément de câblage à la sortie du retireur principal et à l'entrée du second bac de refroidissement.

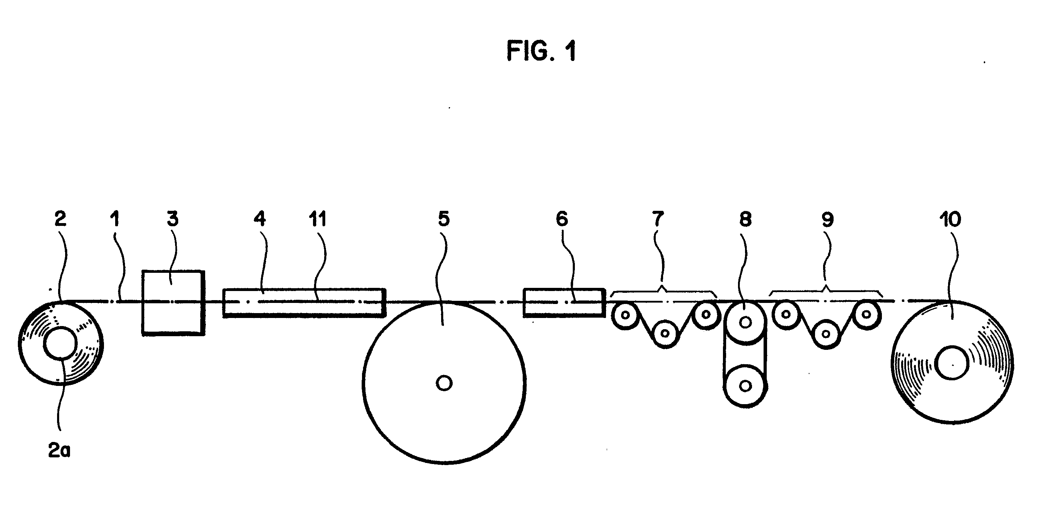

Pour expliquer le procédé, on décrira d'abord succinctement l'installation telle qu'elle est prévue à la fig. 1. Un organe de guidage des ondes lumineuses, qui sera appelé ci-après "fibre-optique", désigné par I est porté sur une bobine débitrice 2 et débité sous une tension Ff maintenue à une valeur garantissant que la fibre reste tendue jusqu'au retireur principal 5, l'allongement restant toutefois dans la limite élastique et étant de préférence aussi voisin que possible de zéro. Cette tension Ff est maintenue au moyen d'un frein magnétique 2a, agissant sur la bobine débitrice 2. La valeur de cette tension peut varier entre 20 et 100 gr.

Retenue par la bobine débitrice 2, la fibre optique 1 pénètre dans la tête d'extrusion 3 qui est alimentée par une extrudeuse conventionnelle, de façon qu'une enveloppe de matière plastique se forme autour de la fibre 1, cette enveloppe étant désignée par 11. Au sortir de la tête 3, la fibre 1 est donc enrobée de l'enveloppe 11, cette opération étant conduite de façon que la libre 1 reste libre à l'intérieur de l'enveloppe 11. Cette dernière pénètre ensuite dans un premier bac de refroidissement 4, alimenté par exemple par de l'eau et réglé de façon que la fibre enrobée soit maintenue à une température prédéterminée $T_1$. La longueur de ce bac est calculée en fonction de la vitesse de passage de l'enveloppe 11 de façon à stabiliser la température de l'enveloppe 11, même pour la vitesse maximum que la ligne peut débiter.

Au sortir du bac 4, l'enveloppe 11 a donc une température égale à $T_1$. Elle passe sur le retireur principal 5, constitué par exemple par une poulie de grand diamètre sur laquelle l'enveloppe 11 effectue plusieurs tours. Le retireur principal est entraîné en rotation à une vitesse constante de façon à assurer le passage de la fibre 1 à travers la tête d'extrusion 3. Le retireur 5 est maintenu à la température $T_1$. Dans une forme d'exécution particulièrement avantageuse, il peut être logé à l'intérieur du bac 4.

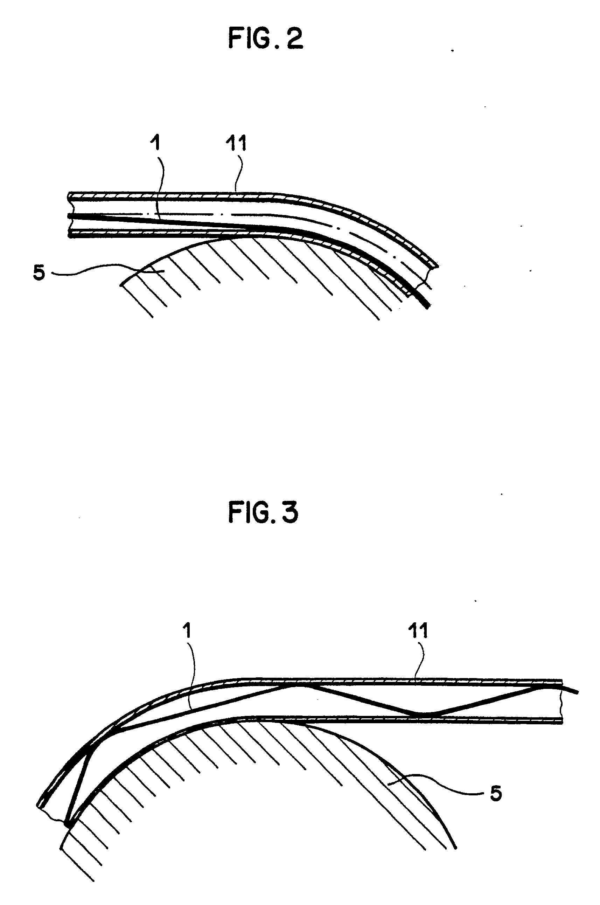

A la sortie du retireur principal 5, l'enveloppe 11 pénètre dans un deuxième bac de refroidissement 6 conçu de façon à amener l'enveloppe 11 à une température $T_2$ inférieure à la température $T_1$. Cette température $T_2$ sera même inférieure à la température ambiante, à laquelle les éléments de câblage terminés et reçus sur les bobines réceptrices 10 seront stockés. Pour assurer le déplacement de l'enveloppe 11 à travers le bac 6, on prévoit un retireur auxiliaire 8, capable de stocker une certaine longueur d'élément de câblage et deux pantins 7 et 9, disposés, l'un entre le bac 6 et le retireur auxiliaire 8, et l'autre entre ce dernier et le bobinoir 10 portant la bobine réceptrice. Ces pantins 7 et 9 sont conçus de façon à assurer le déplacement de l'élément de câblage sous une tension Ft aussi faible que possible. On conçoit que dans ces conditions le passage de la température $T_1$ à la température $T_2$ provoque un retrait du tube, ce qui donne à l'organe de guidage 1, logé à l'intérieur de l'enveloppe 11, une certaine surlongueur. Alors que, à l'entrée du retireur 5 (voir fig. 2) l'organe de guidage 1 est tendu à l'intérieur de l'enveloppe 11, par suite de l'effort de traction dû au frein 2a, qui sera par exemple un frein à hystérèse, l'organe de guidage 1 est entièrement détendu à l'intérieur de l'enveloppe 11 à la sortie du retireur 5, comme le montre la fig. 3.

Il résulte des explications précédentes que si l'enveloppe 11 a un diamètre extérieur D et un diamètre intérieur d et si l'organe de guidage des ondes lumineuses a un diamètre df, on prévoit une différence sensible entre le diamètre d et le diamètre df, même dans le cas où un seul organe de guidage est logé dans l'enveloppe.

Cependant, il doit être bien entendu que le procédé et l'installation décrits s'appliquent également au cas où plusieurs fibres optiques 1 sont engagées simultanément à l'intérieur d'une même enveloppe 11. Le même procédé s'applique également au cas où plusieurs groupes de fibres optiques, gainés chacun dans une enveloppe de protection, sont enrobés simultanément dans une enveloppe externe assurant la protection générale du câble.

La température $T_1$ correspond à un refroidissement partiel de l'enveloppe 11 et de l'élément de guidage 1. La valeur de cette température sera déterminée en fonction des dimensions et des matières utilisées. Elle sera de préférence supérieure à la température ambiante. L'effet déterminant pour l'obtention du résultat visé est le fait qu'après la contraction subie par l'enveloppe 11 lors de la seconde étape de refroidissement, sous une tension aussi faible que possible, la longueur de l'enveloppe 11 est fixée sur le retireur auxiliaire et sur la bobine réceptrice, de sorte que la surlongueur du ou des éléments de guidage des ondes lumineuses se conserve. Cette surlongueur est donc déterminée par la différence des températures de refroidissement $(T_2 - T_1)$. Ainsi, le refroidissement de l'élément de câblage est effectué en deux étapes, soit une première étape de refroidissement effectuée sous une tension prédéterminée, assurant le tirage de la fibre optique à travers la tête d'extrusion puis une seconde étape effectuée en assurant un état de tension nul sur l'élément de câblage de sorte que l'enveloppe peut se contracter librement. Cette contraction libre donne à la fibre optique une légère surlongueur dans son enveloppe ce qui permet de manipuler ensuite l'élément de câblage sans risquer la détérioration de la fibre.

## Revendications

1.  Procédé de fabrication d'un élément de câblage à fibre optique, comportant le passage d'au moins un organe de guidage (1) d'ondes lumineuses dans une tête d'extrusion (3), la formation d'une enveloppe de protection autour de l'organe de guidage par extrusion de matière plastique dans cette tête, de manière à former une enveloppe dans laquelle l'organe de guidage d'ondes est libre, puis le refroidissement de l'enveloppe et de l'organe de guidage, le refroidissement étant effectué en une première étape dans laquelle l'organe de guidage d'ondes et l'enveloppe sont tirés conjointement depuis la tête d'extrusion (3) à travers un premier refroidisseur (4), et en une seconde étape dans laquelle l'organe de guidage d'ondes et l'enveloppe sont conduits conjointement à travers un second refroidisseur (6) de manière telle que l'organe de guidage et l'enveloppe se trouvent à la fin de la première étape à une première température $T_1$ et à la fin de la seconde étape à une température $T_2$ inférieure à $T_1$, le refroidissement étant suivi par l'enroulement de l'élément de câblage ainsi obtenu sur un récepteur (10), caractérisé en ce que, dans la première étape de refroidissement l'organe de guidage d'ondes et l'enveloppe sont soumis à des efforts de traction de valeur prédéterminée, et dans la seconde étape de refroidissement l'organe de guidage d'ondes est soumis à un effort de traction nul et l'enveloppe est soumise à un effort de traction aussi réduit que possible.

2. Procédé selon la revendication 1, caractérisé en ce que la première étape de refroidissement est poursuivie jusqu'à l'obtention d'un état d'équilibre de température entre l'organe de guidage d'ondes, l'enveloppe et le milieu actif du premier refroidisseur.

3. Procédé selon la revendication 1, caractérisé en ce que la seconde étape de refroidissement est effectuée de manière à amener l'enveloppe à une température inférieure à la température ambiante et à la température de stockage des bobines.

4. Procédé selon la revendication 1, caractérisé en ce que l'organe de guidage (1) est soumis dans la tête d'extrusion (3) et au cours de la première étape de refroidissement à un effort de traction qui le maintient dans une position tendue à l'intérieur de l'enveloppe, son allongement restant toutefois dans la limite élastique et étant de préférence aussi voisin que possible de zéro.

5. Elément de câblage obtenu par le procédé selon la revendication 1 ou l'une quelconque des revendications 2 à 4.

6. Elément de câblage selon la revendication 5, caractérisé en ce qu'il comporte une enveloppe à l'intérieur de laquelle s'étendent un ou plusieurs organes de guidage d'ondes lumineuses, ces organes étant indépendants les uns des autres.

7. Elément de câblage selon la revendication 5, caractérisé en ce qu'il comporte une enveloppe à l'intérieur de laquelle s'étendent une pluralité d'organes de guidage d'ondes lumineuses eux-mêmes groupés à l'intérieur de plusieurs enveloppes intérieures s'étendant les unes à côté des autres.

8. Installation pour la mise en oeuvre du procédé selon la revendication 1, comportant au moins une bobine débitrice (2) d'au moins un organe de guidage (1) d'ondes lumineuses, une tête d'extrusion (3), un premier dispositif de refroidissement (4) comportant un premier bac réglé pour refroidir l'élément de câblage (10) à une première température $T_1$, un retireur principal (5) tirant l'élément de câblage à travers la tête d'extrusion (3) et le premier bac (4), un deuxième dispositif de refroidissement (6) réglé pour refroidir l'enveloppe à une seconde température $T_2$ plus faible que la température $T_1$, un retireur auxiliaire (8) capable de tirer l'élément de câblage à travers le deuxième dispositif de refroidissement et un dispositif récepteur (10) d'un élément de câblage terminé capable de recevoir et d'entraîner des bobines réceptrices de manière à stocker l'élément de câblage à la sortie du retireur auxiliaire, caractérisé en ce que la ou les bobines débitrices (2) sont munies de freins (2a) permettant de régler la tension du ou des organes de guidage (1), le deuxième dispositif de refroidissement comporte un second bac (6) et le retireur auxiliaire (8) est capable de tirer l'élément de câblage à travers le second bac (6) avec une force de traction aussi réduite que possible.

**Claims**

1. Method of producing a fibre optic cable, comprising passing at least one lightwave guide component (1) through an extension head (3), forming a protective sheath around the guide component by extruding plastic material in this head, in such a way as to form a sheath in which the wave guide component is free, then cooling the sheath and the guide component, the cooling being effected in a first stage in which the wave guide component and the sheath are pulled jointly from the extrusion head (3) through a first cooler (4), and a second stage in which the wave guide component and the sheath are led jointly through a second cooler (6) so that at the end of the first stage, the guide component and the sheath are at a first temperature $T_1$ and at the end of the second stage at a temperature $T_2$ lower than $T_1$, the cooling being followed by winding the cable thus obtained on a receiver (10), characterized in that, in the first stage of cooling the wave guide component and the sheath are subjected to tensile stress of a predetermined value, and in the second stage of cooling the wave guide component is subjected to no tensile stress and the sheath is subjected to as little tractive force as possible.

2. Method according to claim 1, characterized in that the first stage of cooling is continued until a state of temperature equilibrium between the wave guide component, the sheath and the active centre of the first cooler is attained.

3. Method according to claim 1, characterized in that the second stage of cooling is carried out so as to bring the sheath to a temperature which is lower than the ambient temperature and the temperature at which the reels are to be stored.

4. Method according to claim 1, characterized in that the guide component (1) is subjected in the extrusion head (3) and during the first stage of cooling to tensile stress which keeps it in a taut position within the sheath, whilst its elongation remains within the elastic limit and preferably being as near as possible to zero.

5. Cable obtained by the method according to claim 1 or one of claims 2 to 4.

6. Cable according to claim 5, characterized in that it comprises a sheath, in whose interior extend one or several lightwave guide components, these components being independent of one another.

7. Cable according to claim 5, characterized in that it comprises a sheath, in whose interior extend a plurality of lightwave guide components themselves grouped within several inner sheaths extending one beside the other.

8. Installation for implementing the method according to claim 1, comprising at least one payout reel (2) of at least one lightwave guide component (1), an extrusion head (3), a first cooling device (4) comprising a first vat adjusted for cooling the cable (10) to a first temperature T1, a main withdrawal means (5) for pulling the cable through the extrusion head (3) and the first vat (4), a second cooling device (6) adjusted to cool the sheath to a second temperature $T_2$ lower than temperature $T_1$, an auxiliary withdrawal means (8) capable of pulling the cable through the second cooling device and a device (10) for receiving a finished cable, capable of receiving and winding takeup reels so as to store the cable on leaving the auxiliary receiver, characterized in that the payout reel(s) (2) are provided with brakes (2a) allowing regulation of the tension of the guide component(s) (1), the second cooling device comprising a second vat (6) and the auxiliary withdrawal means (8) is capable of pulling the cable through the second vat (6) with as low a tractive force as possible.

**Patentansprüche**

1. Verfahren zur Herstellung eines optischen Faserkabelelementes, welches den Durchgang mindestens eines Führungsorgans (1) für Lichtwellen in einem Extrusionskopf (3), die Bildung einer Schutzhülle um das Führungsorgan durch Extrusion von plastischer Materie in diesem Kopf umfasst, um eine Umhüllung zu bilden, in welcher das Lichtwellenführungsorgan frei ist, die Umhüllung und das Führungsorgan gekühlt werden, wobei die Kühlung in einem ersten Schritt durchgeführt wird, in welchem das Lichtwellenführungsorgan und die Umhüllung gemeinsam vom Extrusionskopf (3) quer durch einen ersten Kühler (4) gezogen werden, und in einem zweiten Schritt, in welchem das Lichtwellenführungsorgan und die Umhüllung gemeinsam quer durch einen zweiten Kühler (6) auf solche Art geführt werden, dass das Führungsorgan und die Umhüllung sich am Ende des ersten Schrittes auf einer ersten Temperatur $T_1$ und am Ende des zweiten Schrittes auf einer Temperatur $T_2$, welche tiefer als die Temperatur $T_1$ ist, befinden, auf die Kühlung das Aufwickeln des so erhaltenen Kabelelementes auf eine Aufnahmevorrichtung (10) erfolgt, dadurch gekennzeichnet, dass im ersten Kühlschritt das Lichtwellenführungsorgan und die Umhüllung Zugbeanspruchungen mit vorbestimmtem Wert unterworfen sind, und dass im zweiten Kühlschritt das Lichtwellenführungsorgan einer Zugbeanspruchung Null unterworfen wird, und die Umhüllung einer so stark als möglich reduzierten Zugbeanspruchung unterworfen wird.

2. Verfahren nach Patentanspruch 1, dadurch gekennzeichnet, dass der erste Kühlschritt weitergeführt wird bis zum Erreichen eines Temperatur-Gleichgewichtszustandes zwischen dem Lichtwellenführungsorgan, der Umhüllung und dem aktiven Medium des ersten Kühlers.

3. Verfahren nach Patentanspruch 1, dadurch gekennzeichnet, dass der zweite Kühlschritt auf solche Art durchgeführt wird, dass die Umhüllung auf eine Temperatur gebracht wird, die niedriger als die Umgebungstemperatur und die Temperatur der Rollenlagerung ist.

4. Verfahren nach Patentanspruch 1, dadurch gekennzeichnet, dass das Führungsorgan (1) im Extrusionskopf (3) und während dem ersten Kühlschritt einer Zugbeanspruchung unterworfen wird, die es in einer gespannten Lage im Inneren der Umhüllung hält, wobei die Dehnung jedoch innerhalb der Elastizitätsgrenze bleibt und vorzugsweise so nah als möglich bei Null liegt.

5. Kabelelement, hergestellt durch das Verfahren nach Patentanspruch 1 oder einem der Ansprüche 2 bis 4.

6. Kabelelement nach Patentanspruch 5, dadurch gekennzeichnet, dass es eine Umhüllung aufweist, wobei sich im Inneren derselben ein oder mehrere Lichtwellenführungsorgane erstrecken, wobei die Organe unabhängig voneinander sind.

7. Kabelelement nach Patentanspruch 5, dadurch gekennzeichnet, dass es eine Umhüllung aufweist, in deren Innerem sich eine Mehrzahl von Lichtwellenführungsorganen erstrecken, welche ihrerseits im Inneren von mehreren erstrecken, welche ihrerseits im Inneren von mehreren inneren Umhüllungen gruppiert sind, welche sich nebeneinander erstrecken.

8. Einrichtung zur Durchführung des Verfahrens nach Patentanspruch 1 mit mindestens einer Abgaberolle (2), mindestens einem Lichtwellenführungsorgan (1), einem Extrusionskopf (3), einer ersten Kühleinrichtung (4), welche einen ersten regulierten Behälter aufweist, um das Kabelelement (1) auf eine erste Temperatur $T_1$ zu kühlen, einer Hauptabzugeinrichtung (5), welche das Kabelelement quer durch den Extrusionskopf (3) und den ersten Behälter (4) zieht, einer zweiten, geregelten Kühleinrichtung (6), um die Umhüllung auf eine zweite Temperatur $T_2$ abzukühlen, welche niedriger ist als die Temperatur $T_1$, eine Hilfsabzugeinrichtung (8), welche ausgebildet ist, um das Kabelelement quer durch die zweite Kühleinrichtung zu ziehen, und einer Aufnahmevorrichtung (10) für ein fertiges Kabelelement, welche ausgebildet ist, um die Aufnahmerollen auf eine solche Art und Weise aufzunehmen und mitzunehmen, um das Kabelelement am Ausgang der Hilfsabzugeinrichtung zu lagern, dadurch gekennzeichnet, dass die Abgaberolle oder Abgaberollen (2) mit Bremsen (2a) versehen sind, welche es ermöglichen, die Spannung des oder der Führungsorgane (1) zu regulieren, wobei die zweite Kühleinrichtung einen zweiten Behälter (6) aufweist, und die Hilfsabzugeinrichtung (8) so ausgebildet ist, um das Kabelelement quer durch den zweiten Behälter (6) mit einer so stark als möglich reduzierten Zugkraft zu ziehen.

# FIG. 1

EP 0 185 615 B1

FIG. 2

FIG. 3